(19)

Europäisches
Patentamt
European
Patent Office
Office européen
des brevets

(11) **EP 3 048 567 A1**

(12) **EUROPEAN PATENT APPLICATION**

(43) Date of publication:
**27.07.2016 Bulletin 2016/30**

(51) Int Cl.:
***G06Q 10/00*** (2012.01)        ***G06Q 50/14*** (2012.01)

(21) Application number: **15000146.9**

(22) Date of filing: **20.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Amadeus S.A.S.
06410 Biot (FR)**

(72) Inventors:
• **Cheinet, Antoine
06130 Grasse (FR)**

• **Ambolet, Patrice
06330 Roquefort les Pins (FR)**
• **Mousli, Bruno
06600 Antibes (FR)**

(74) Representative: **Samson & Partner Patentanwälte
mbB
Widenmayerstraße 6
80538 München (DE)**

(54) **Revenue-optimized opaque bookings**

(57)    An apparatus, program product and method delay finalization of a travel itinerary for an opaque booking until a point in time after the opaque booking is completed, such that the travel itinerary for the opaque booking may be reassessed prior to finalizing the travel itinerary.

Reassessment of opaque booking travel itineraries may be performed using a global optimization that operates across multiple opaque bookings to attempt to generate travel itineraries that optimize revenue for one or more travel providers.

**FIG. 1**

## Description

## Field of the Invention

Embodiments of the invention relate generally to computers and computer software, and more specifically, to the use of computers and computer software to handle opaque bookings in the travel industry.

## Background of the Invention

Computer reservation systems are used in the travel industry to store and retrieve information and conduct transactions related to air travel, rail travel, hotels, car rental, and other travel-related activities. In particular, third party reservation agents, such as travel agents, and/or customers (e.g., travelers) often utilize computer based devices to interface with a reservation system, such as a Global Distribution System (GDS), to book travel arrangements and/or travel related services for the customer.

It has been found in the travel industry that adding some uncertainty to the travel-related transactions can provide a benefit to both travelers and travel providers. The hotel industry, for example, retails some hotel offers in a manner that does not reveal all of the details of the offers prior to finalizing booking. Some offers of this type are generally referred to as opaque bookings in the travel industry.

With an opaque booking, a traveler, for example, may be permitted to select specific nights and a general location for a hotel stay and be presented with one or more offers, with each offer specifying a price and some general details about the type of hotel that the traveler would stay in upon acceptance of the offer, e.g., from a budget-level hotel up to a luxury hotel. It is only after a traveler selects and pays for an offer that the hotel name and exact location are revealed to the traveler.

Opaque bookings are a benefit to travelers because such bookings are generally less expensive to compensate for the opacity of the booking. Such bookings are also of a benefit to travel providers because the bookings often enable the travel providers to select travel products for such opaque bookings in a manner that attempts to optimize revenue. For instance, for hotel providers, hotel rooms having the greatest availability may be selected over other hotel rooms having lower availability to reduce the risk of hotel rooms going unused.

The opacity of a conventional opaque booking, however, generally ends once an opaque booking has been completed, i.e., once a purchase of the opaque booking has been completed. As such, a travel provider is generally required to commit to a particular travel itinerary (e.g., defining one or more travel products such as specific hotels, flights, etc.) to fulfill an opaque booking at the time the booking is completed. Some opaque bookings, however, may be made days, weeks, or months in advance of travel, and changes in circumstances may occur between the time at which an opaque booking is completed and the time of departure (i.e., the time at which any travel product associated with the opaque booking is used). As such, it may no longer be the case that a travel product selected as an optimum travel product at the time an opaque booking is completed is still the optimal travel product at the time of departure.

Therefore, a need continues to exist in the art for a manner of optimizing revenue in association with opaque bookings.

## Summary of the Invention

The invention addresses these and other problems associated with the prior art by providing an apparatus, program product and method that delay finalization of a travel itinerary for an opaque booking until a point in time after the opaque booking is completed, such that the travel itinerary for the opaque booking may be reassessed prior to finalizing the travel itinerary. Reassessment of opaque booking travel itineraries may be performed using a global optimization that operates across multiple opaque bookings to attempt to generate travel itineraries that optimize revenue for one or more travel providers.

Therefore, according to one aspect of the invention, a travel itinerary may be generated for an opaque booking. In response to receiving a first opaque booking for at least one traveler, an initial travel itinerary for the first opaque booking is generated, where the initial travel itinerary includes travel between a departure location and a destination location, and where at least a portion of travel itinerary details for the first opaque booking are initially withheld from the at least one traveler after the first opaque booking is completed. After generating the initial travel itinerary for the first opaque booking, and prior to communicating withheld travel itinerary details to the at least one traveler in advance of departure by the at least one traveler, a global optimization of the first opaque booking and at least a second opaque booking is performed to optimize revenue across at least the first and second opaque bookings, where performing the global optimization includes modifying the initial travel itinerary for the first opaque booking to generate a modified travel itinerary that increases revenue relative to the initial travel itinerary. After performing the global optimization, withheld travel itinerary details associated with the modified travel itinerary are communicated to the at least one traveler prior to departure by the at least one traveler.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there are described example embodiments of the invention.

## Brief Description of the Drawings

FIGURE 1 is a block diagram of one or more reservation systems, inventory systems, travel provider systems and travel reservation devices consistent with embodiments of the invention.

FIGURE 2 is a block diagram of an inventory system of Fig. 1.

FIGURE 3 is a block diagram of an example schema for a global architecture suitable for managing revenue-optimized opaque bookings consistent with the invention.

FIGURES 4 and 5 are block diagrams of an example data model suitable for use in the architecture of Fig. 3.

FIGURE 6 is a sequence diagram that illustrates a sequence of operations that may be performed when managing revenue-optimized opaque bookings consistent with the invention.

FIGURE 7 is a flowchart illustrating a sequence of operations that may be performed for a flight selection process consistent with the invention.

FIGURE 8 is a flowchart illustrating a sequence of operations that may be performed for an opaque booking optimization process consistent with the invention.

## Detailed Description

Embodiments consistent with the invention delay finalization of a travel itinerary for an opaque booking until a point in time after the opaque booking is completed, such that the travel itinerary for the opaque booking may be reassessed prior to finalizing the travel itinerary. Reassessment of opaque booking travel itineraries may be performed using a global optimization that operates across multiple opaque bookings to attempt to generate travel itineraries that optimize revenue for one or more travel providers.

An opaque booking, in this regard, is a booking for a travel itinerary including one or more travel products, where at least some of the details of the travel itinerary are withheld from a traveler until after the booking has been completed, i.e., after a purchase of the booking has been completed. For the purposes of this disclosure, an opaque booking may be considered to be in various states. For example, once the purchase of an opaque booking has been completed, the opaque booking may be considered to be completed. In addition, whenever the rest of the details of the travel itinerary are provided to the traveler, the opaque booking may be considered to be finalized because the travel provider(s) associated with the travel itinerary are at that point obligated to provide the designated travel products in the travel itinerary. In addition, in the illustrated embodiments, an opaque booking that is completed, but not yet finalized, may be considered to be unfinalized. When in the unfinalized state, at least a portion of the details of a travel itinerary associated with the opaque booking have not yet been disclosed, and from the perspective of any travel provider associated with that travel itinerary, are subject to change. Consequently, a travel provider is allowed to change one or more travel products associated with the travel itinerary prior to finalization, e.g., if it is determined that a different travel product would be better suited for the travel provider from a revenue or resource allocation perspective.

A travel itinerary as discussed herein may include one or more travel segments between two or more locations, e.g., between one or more of a departure location, a destination location and/or one or more intermediate locations. Additional travel products or services may also be included in an itinerary, including travel via multiple types of carriers (e.g., air, rail, road, sea, etc.) as well as additional travel products such as hotels, car rentals, shuttles, attractions, etc.

The details of a travel itinerary that may be initially withheld may therefore vary in different applications. For example, details such as dates of departure and/or return, times of departure and/or return, travel destination, travel provider (e.g., airline, hotel operator, train operator, cruise operator, rental car company, etc.), specific travel product (e.g., specific flight, hotel, train, cruise, rental car, etc.) may initially be withheld and only provided at a point in time closer to departure (i.e., the point in time in which one or more travel products of a travel itinerary are used by a traveler).

The hereinafter-described embodiments, for example, will focus on an airline-oriented application in which an opaque booking is associated with a travel itinerary where the travel segments are represented by flights. As such, an opaque booking may be made with an airline specifying, for example, one or more departure locations or airports, one or more destination locations or airports, one or more departure dates and/or times, one or more return dates and/or times and/or one or more durations, with varying degrees of uncertainty or opacity applied such that at least a portion of the details of a resulting travel itinerary are initially withheld from the traveler. Thus, for example, an opaque booking might be made for travel between New York and Nice, France, departing during the first week of September and returning two weeks thereafter, with the traveler being provided with details (e.g., dates, times, flight numbers, airports, etc.) for the outgoing and returning flights provided at a later time.

It will be appreciated, however, that the principles of the invention may be applied to other travel-related bookings, including other travel products (e.g., hotels, rental cars, cruises, trains, etc.) as well as packages of multiple travel products, e.g., including both air travel and other types of travel products. In addition, the principles of the invention may also be applied in multi-provider scenarios, e.g., where flights or other travel products may be supplied by multiple travel providers. Therefore, the invention is not limited to the particular airline-oriented application disclosed herein.

As will become more apparent below, in some embodiments consistent with the invention, in response to receiving an opaque booking for at least one traveler, an initial travel itinerary for traveling between a departure location and a destination location is generated. The opaque booking, though completed, is unfinalized because at least a portion of the details of the travel itinerary are withheld from the traveler. After generating the initial travel itinerary for the opaque booking, and prior to communicating the withheld travel itinerary details to a traveler in advance of departure, a global optimization of multiple opaque bookings is then performed to optimize revenue across those opaque bookings. The global optimization may include, for example, modifying the initial travel itinerary for an opaque booking to generate a modified travel itinerary that increases revenue relative to the initial travel itinerary. After performing the global optimization, and prior to departure, withheld travel itinerary details associated with the modified travel itinerary may then be communicated to the traveler prior to departure.

As will further become more apparent below, in some embodiments, modifying the travel itinerary may include modifying the destination location, changing one or more travel segments between the departure location and the destination location, changing one or more travel segments between the departure location and a modified destination location, modifying a departure date or modifying a return date. In some embodiments, the global optimization may be performed as a regular maintenance batch operation or in response to unavailability of a destination location during booking of an opaque product.

In some embodiments, an opaque product inventory may be maintained, including, for each of a plurality of date, departure location and destination location combinations, a set of matching travel itineraries, an associated cost and an availability. Generating the initial travel itinerary may also include selecting a destination location and date for the initial travel itinerary based upon the associated costs and availabilities for at least a subset of the date, departure location and destination location combinations.

In some embodiments, the opaque product inventory may be updated in response to a new opaque booking or a regular batch operation. In some embodiments, the global optimization may be performed in response to one or more of a travel inventory item being canceled, a travel inventory item expected load factor meeting a threshold, or a travel inventory item lacking capacity for additional opaque bookings.

In some embodiments, maintaining the opaque product inventory further includes, for each of the plurality of date, departure location and destination location combinations, maintaining for each of a plurality of travel inventory items included in the set of matching travel itineraries one or more of an expected load factor, an opaque capacity or a bid price displacement cost. Generating the initial travel itinerary may further include selecting a matching travel itinerary from among the set of matching travel itineraries for a date, departure location and destination combination matching the selected destination location and date for the initial travel itinerary based upon the one or more of the opaque capacity, expected load factor, or bid price displacement cost for one or more travel inventory items included in the set of matching travel itineraries for the date, departure location and destination combination matching the selected destination location and date for the initial travel itinerary.

In some embodiments, performing the global optimization includes reselecting a destination location and date or reselecting a matching travel itinerary from among the set of matching travel itineraries for the date, departure location and destination combination matching the selected destination location and date for the initial travel itinerary.

In some embodiments, performing the global optimization includes comparing a cost of changing an opaque booking from a first, less expensive date, departure location and destination location combination to a second, more expensive date, departure location and destination location combination with a benefit of reopening the first, less expensive date, departure location and destination location combination for another opaque booking.

In some embodiments, the associated cost for a travel itinerary may be based at least in part on a tax associated with one or more locations associated with the travel itinerary and an expected load factor and displacement cost associated with one or more travel inventory items associated with the travel itinerary. In some embodiments, communicating withheld travel itinerary details associated with a modified travel itinerary to a traveler may be performed at a time relative to departure by the traveler. Furthermore, in some embodiments a plurality of global optimizations may be performed between a time of completing an opaque booking and a time relative to departure by a traveler to refine the initial travel itinerary based on changes in availability and/or revenue data from the time of the opaque booking.

Other variations and modifications will be apparent to one of ordinary skill in the art.

Hardware and Software Environment

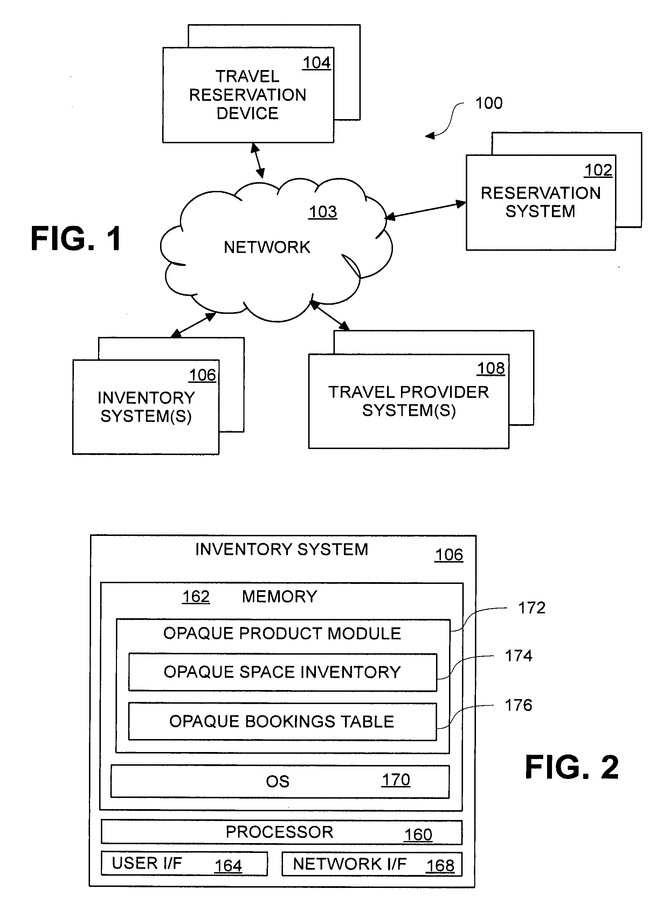

Turning now to the drawings, wherein like numbers denote like parts throughout the several views, Fig. 1 illustrates a data processing system 100 including one or more devices and/or systems that may be used to implement the various features of the invention. A reservation system 102 may be implemented as one or more servers, and may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency, traveler, or other such travel reservation service) may initialize a reservation session with the reservation system 102 to communicate a booking request and/or other such relevant data to the reservation system 102. The travel reservation device 104 may be a personal computing device, desktop computer, laptop computer, tablet computer, thin client terminal, smart phone and/or other such computing device.

One or more servers for one or more inventory systems 106 may also be connected to the communication network 103, as may one or more travel provider systems 108. The reservation system 102 may initialize an inventory session over the communication network 103 with each inventory system 106 for which a travel inventory item is to be booked. Consistent with embodiments of the invention, a reservation agent may interface with the reservation system 102 using the travel reservation device 104 in a reservation session to provide data for a booking request. In turn, the reservation system interfaces with each inventory system 106 that provides a travel inventory item needed for the booking request in an inventory session. Moreover, while the reservation system 102, inventory system 106, and/or travel provider system 108 are described herein as separate entities, the invention is not so limited. In some embodiments, various hardware, software components, and/or sequences of operations described with respect to the reservation system 102, inventory system 106, and/or travel provider system 108 may be implemented on the reservation system 102, inventory system 106, and/or travel provider system 108. Furthermore, as will be appreciated, in some embodiments the reservation system 102 and/or travel provider system 108 may be components of a Global Distribution System (GDS).

Turning now to Fig. 2, this figure provides a block diagram that illustrates the components of the one or more servers of the inventory system 102 that are related to implementing the herein-described opaque booking functionality. The inventory system 106 includes at least one processor 160 including at least one hardware-based microprocessor and a memory 162 coupled to the at least one processor 160. The memory 162 may represent the random access memory (RAM) devices comprising the main storage of inventory system 106, as well as any supplemental levels of memory, e.g., cache memories, non-volatile or backup memories (e.g., programmable or flash memories), read-only memories, etc. In addition, memory 162 may be considered to include memory storage physically located elsewhere in the inventory system 106, e.g., any cache memory in a microprocessor, as well as any storage capacity used as a virtual memory, e.g., as stored on a mass storage device or on another computer coupled to the inventory system 106.

For interface with a user or operator, the inventory system 106 may include a user interface 164 incorporating one or more user input/output devices, e.g., a keyboard, a pointing device, a display, a printer, etc. Otherwise, input may be received via another computer or terminal (e.g., the reservation system 102, the travel provider system 108, and/or the travel reservation device 104) over a network interface 168 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 170 and executes or otherwise relies upon various computer software applications, components, programs, objects, modules, engines, data structures, etc., including for example, an opaque booking module 172, which includes an opaque space inventory 174 and opaque bookings table 176. In general, the opaque booking module 172 may be configured to manage opaque bookings over the course of their lifetimes. The opaque space inventory 176 tracks the current allocation of opaque bookings to travel products, while the opaque bookings table tracks opaque bookings.

Various additional applications, components, programs, objects, modules, etc. may also execute on one or more processors in another computer coupled to the inventory system 106 via the communication network 103, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the example environment illustrated in Figs. 1 and 2 is not intended to limit the present invention. Indeed, those skilled in the art will recognize that other alternative hardware and/or software environments may be used without departing from the scope of the invention.

Revenue-Optimized Opaque Bookings

Opaque bookings, particularly in the airline industry, have conventionally maintained opacity only for the duration of a shopping transaction, i.e., all the itinerary details of an opaque product are disclosed upon booking completion. In a typical transaction, a traveler might select an opaque product (e.g., a beach trip) from a travel provider web site and may be presented with a set of possible destinations and dates. The traveler may refine his/her selection by reducing opacity on travel destinations and/or dates (e.g., by de-selecting some destinations and/or selecting price travel dates, with the price of the opaque product increasing as the opacity is reduced. Once the traveler is satisfied with the selection, the traveler may then go to a payment page, enter his/her details and commit to the transaction. The travel provider then, in the background, selects a flight meeting the traveler's requests based upon the travel provider's current inventory, e.g., by selecting a flight having the greatest availability, and thus the most unused capacity, among the flights that match the traveler's selection. At that point, the travel provider may then disclose the details of the traveler's itinerary (e.g., in a confirmation email). The opaque booking is then treated like a standard booking given that the travel provider has committed to the specific itinerary presented to the traveler.

It has been found, however, that by committing to a specific itinerary at the completion of an opaque booking, sub-optimal results may occur, particularly when an opaque booking is completed well prior to the commencement of travel. Despite travel provider efforts to predict future sales activities, actual sales over that time frame may vary from predicted activity, resulting in travel products having different availabilities than were predicted when an opaque booking was completed.

Embodiments consistent with the invention, on the other hand, delay finalization of a travel itinerary for an opaque booking until a point in time after the opaque booking is completed, such that the travel itinerary for the opaque booking may be reassessed prior to finalizing the travel itinerary. In the embodiments discussed hereinafter, for example, reassessment of opaque booking travel itineraries is performed using a global optimization that operates across multiple opaque bookings to attempt to generate travel itineraries that optimize the allocation of opaque bookings across various travel products based upon availability and/or revenue concerns.

As will become more apparent below, in the illustrated embodiments an opaque product inventory is maintained to track opaque bookings and virtually allocate the opaque bookings to travel provider inventories, with global optimizations performed to the opaque product inventory at different points in time to re-allocate opaque bookings in a manner that optimize availability and/or revenue based upon the circumstances that exist when the global optimizations are performed. Once an opaque booking reaches a time at which itinerary details are disclosed to a traveler, the opaque booking is converted into a standard booking and is removed from the opaque product inventory.

As such, in some embodiments the use of an opaque product inventory and the global optimizations performed therewith enable travel providers to reshuffle opaque bookings to better meet airline business policies and optimize the allocation of opaque bookings across a travel provider's network, allowing a travel provider to potentially sell more of such products and obtain optimal revenues therefrom.

In the embodiments discussed hereinafter, an application of the invention in the airline industry is discussed, whereby a travel provider is an airline and an itinerary (which may also be referred to as a travel solution) includes one or more flights as travel products. It will be appreciated, however, that the invention is not limited to such an application, and adapting the principles applied herein to other travel products and/or travel providers would be well within the abilities of one of ordinary skill in the art having the benefit of the instant disclosure.

Now turning to an example embodiment for booking flights using opaque bookings, this example embodiment attempts to optimize revenue earned by an airline through the sales of opaque products. The opaque products offer to an airline three primary axes on which the airline may act to optimize revenue and load factor through the assignment of opaque bookings on the most interesting travel solutions:

Destination: A traveler chooses a set of destinations, which have different airport taxes, and different costs.

Travel Date: Flexibility on the dates chosen by the traveler.

Information Date: Date at which the traveler has to be informed about the details of the itinerary, and until which an opaque booking may be reassigned to a new itinerary in order to optimize revenue brought by the corresponding opaque booking.

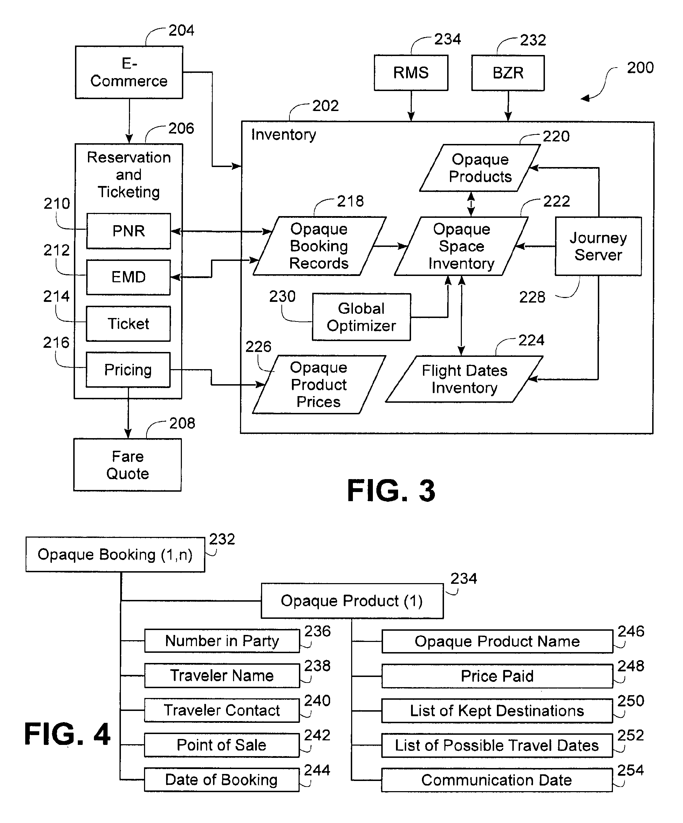

A schema presenting a global architecture 200 used in the example embodiment is illustrated in Fig. 3. In this architecture, an inventory system 202 is coupled to an E-Commerce system 204, reservation and ticketing system 206 and fare quote system 208. E-Commerce system 204 accesses inventory system 202 to obtain opaque product availability and price, and accesses reservation and ticketing system 204 to create an opaque booking.

Reservation and ticketing system 206 includes a Passenger Name Record (PNR) module 210, Electronic Miscellaneous Document (EMD) module 212, ticket module 214 and pricing module 216. In addition, inventory system 202 includes a number of data structures used for opaque bookings, including opaque booking records 218, opaque products 220, opaque space inventory 222 and flight dates inventory 224, as well as two modules, a journey server 228 and global optimizer 230, that manage opaque bookings within the inventory system.

PNR module 210 generates opaque booking records 218 in response to E-Commerce system 204, and both PNR module 210 and EMD module 212 may access opaque booking records 218, e.g., in connection with ticket exchanges. Ticket module 214 handles ticketing, while pricing module 216 accesses both opaque product prices 226 to obtain the prices for opaque products, and fare quote system 208 to obtain taxes for selected flights.

Opaque booking records 218 are used to store confirmed but not-yet finalized opaque bookings, and may be maintained in opaque space inventory 222, which maintains all of the opaque bookings that have not been finalized for the airline. Opaque products 220 refer to the definitions of the products offered by the airline, and opaque product prices 226 refer to the prices that are established for different opaque products, both of which may be managed, for example by an airline through a business rule framework (BZR) 232 (which may in some embodiments be administered through a dedicated user interface). A revenue management system (RMS) 234 may also be accessed to provide revenue data used in allocating opaque bookings to particular itineraries, as will be discussed in greater detail below.

Opaque products 220 accesses journey server 228 and a current flight dates inventory 224 (representing the overall inventory availability for the airline) for the airline to build the opaque space inventory 222. In addition, as will be discussed in greater detail below, global optimizer 230 from time to time performs a global optimization to optimize the travel solutions allocated to different opaque bookings that have not yet been finalized.

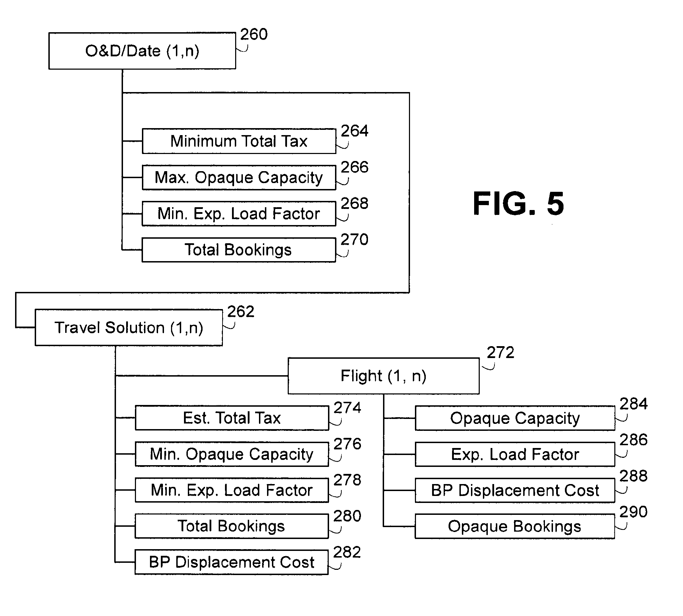

While a number of different data models may be used to represent the aforementioned data utilized in connection with the management of opaque bookings, Figs. 4 and 5 collectively illustrate an example data model that may be used in the illustrated embodiment. As shown in Fig. 4, for example, an opaque booking 232, for example, may reference an opaque product 234, and may further include additional information such as the number of travelers in the party 236, the traveler name 238, traveler contact information 240, a point of sale 242 and a date of booking 244. An opaque product 234, in turn, may include an opaque product name 246, a price paid 248, a list of kept destinations 250 (i.e., the destinations that may be included in an unfinalized or finalized itinerary or travel solution), a list of possible travel dates 252 (i.e., the travel dates that may be included in an unfinalized or finalized itinerary or travel solution), and a communication date 254 (i.e., the date that the traveler will be notified of the finalized itinerary details).

Fig. 5 illustrates an example data model for an opaque space inventory. For each combination of origin and destination (O&D) and date 260, a list of travel solutions 262 is maintained for that particular O&D and date. In addition, each O&D and date combination includes a minimum total tax 264 (i.e., a minimum airport tax among the airport taxes for all of the travel solutions 262, a maximum opaque capacity 266 (i.e., the maximum number of travelers that can board together on a particular O&D and date), a minimum expected load factor 268 (i.e., a measurement of an airline's traveler carrying capacity utilization, generally represented as a ratio of passenger kilometers flown to seat kilometers available, with the minimum being the minimum expected load factor among all of the travel solutions for the particular O&D and date), and a total number of bookings 270 for that O&D and date.

Each travel solution 262 references one or more flights 272, and also includes an estimated total tax 274 (i.e., the total airport tax for a given travel solution), a minimum opaque capacity 276 (to ensure all passengers can board on the different flights or segments of the same travel solution), a minimum expected load factor 278, a total number of bookings 280 and a bid price (BP) displacement cost 282 (which, as described below, is indicative of expected revenue).

Each flight 272 of a travel solution may include an opaque capacity 284 used to determine opaque product availability, an expected load factor 286 representing availability on the flight (and thus useful for determining a most interesting travel solution within an O&D and date combination), a bid price (BP) displacement cost 288 and a link to the opaque bookings 290 assigned to the flight. In some embodiments, opaque booking counters may be maintained at flight, travel solution and O&D levels, and in the case that the number of opaque bookings becomes greater than the opaque capacity, the list of opaque bookings counted in a counter may be retrieved in order to know what the flexibility is to move to another O&D/Date and/or travel solution.

The expected load factor and the bid price vectors may be provided by a revenue management system, and an inventory system may compute both opaque capacity and bid price displacement cost. The bid price displacement cost may be considered to be the bid price differential between the bid price of the (expected to board) seat index and the bid price of the (expected to board +1) seat index. In addition, in some embodiments, a journey cost estimation, e.g., based on the length of the journey and an estimate cost per kilometer, may be maintained in each travel solution 262, with a minimum journey cost amongst the different available travel solutions maintained at the O&D/Date level. Journey cost estimates may also incorporate airport taxes in some embodiments.

Returning to Fig. 3, in the example embodiment E-Commerce system 204 may be used to retrieve available opaque products and their associated price structures through an interface with inventory system 202. A traveler may be permitted to select from which airport he or she wants to travel, resulting in the generation and submission of an opaque product availability request to the inventory system 202 to retrieve available opaque products.

The inventory system 202 may then retrieve a list of opaque products 220 defined for the departure airport, as well as the associated pricing structure, and return that information to the E-Commerce system. The pricing structure may be provided rather than a price so that a range of prices may be dynamically determined for an opaque product based upon the options selected by the traveler. For example, a lower price may be offered if the traveler accepts more possible destinations, accepts greater flexibility in terms of departure date and/or duration, and/or agrees to wait a longer time period before being advised of the itinerary details. Thus a pricing structure may be provided that defines one or more rules and/or formulas from which a dynamic price may be generated based upon one or more traveler-defined options. In some embodiments, a set of possible destinations may be initially presented to a traveler and the price may increase as the traveler excludes destinations from the initial set.

From the E-Commerce system, a traveler may be able to choose an opaque product, and choose different options, e.g., number of people traveling, a subset of available destinations, a departure date or a range of departure dates, and/or a date or time at which the details of the itinerary will be communicated to the traveler, all of which may be considered when generating a corresponding price from the pricing structure provided by the inventory system. Once the traveler has personalized the opaque product, the traveler may request to purchase the opaque product, at which point an opaque booking request may be sent to the inventory system 206 to check availability with the chosen options and verify price. An opaque booking confirmation may then be returned to the E-Commerce system 204, which allows the traveler to proceed to the payment. Once the payment has been completed, the opaque booking is completed, and an opaque booking notification may be sent to the inventory system 202 including the same information provided in the opaque booking request. When an opaque booking notification is received, an optimal current travel solution (i.e., based upon current circumstances in terms of availability and/or revenue concerns) may be determined for the opaque booking. In one embodiment, for example, a two step flight selection process may be performed, where a most interesting destination is selected based upon the available O&D and date combination having the lowest associated cost, and then a most interesting travel solution may be selected from among those available for the selected O&D and date combination.

As will become more apparent below, a similar flight selection process may be re-used during a global optimization batch operation that reassesses the currently selected travel solution for each unfinalized opaque booking. Once an opaque booking reaches the agreed-upon date when the traveler is informed of the itinerary details, the currently selected travel solution may be selected as the final itinerary, at which point the opaque booking may be finalized and converted to a standard booking. In some embodiments, an opaque booking may retain an opaque booking flag so that the opaque booking may be distinguished from other, standard bookings. It should also be noted that unfinalized opaque bookings in some embodiments do not decrement the availability for standard bookings such that opaque booking allocation optimization may be performed without impacting standard bookings, and such that only when an opaque booking is turned into a standard booking the inventory is decremented. In such embodiments, triggers for global optimization and controls in place may reduce the risk of overbooking due to opaque bookings that finalize.

As also noted above, inventory system 202 may provide a user interface to an airline to define and create different opaque products to be offered to travelers. Opaque products may include a global definition with different proposed options, a definition of the flexibility offered for each of the options, and a pricing structure corresponding to the flexibility of the different proposed options. In some instances, an initial price may also be defined.

Thus, in one embodiment, an airline may define an opaque product and the options associated therewith using one or more business rules. An example opaque product may include:

- Opaque Product Name,

- Origin Market

- Destination Market

- Sale Date Range

- Departure Date Range and Frequency

- Default Departure Date Flexibility

- Default Information Date at which the traveler will be informed about itinerary details.

Next, an airline may define the initial price of the opaque product, as well as the pricing structure of the different options offered. For example, for destination opaqueness, an airline may define a suppression cost associated with each possible destination, as well as a minimum number of remaining possible destinations, and optionally a list of non-suppressible destinations. For departure date opaqueness, an airline may define a minimum number of possible departure dates and a price adjustment corresponding to the increase or the reduction of the associated flexibility (e.g., +/- X Euros for +/- N days/week). For information date opaqueness, an airline may define a default information date (e.g., 10 days before departure and a price adjustment corresponding to the increase or the reduction of the associated flexibility (e.g., +/- X Euros for +/- N days/week). In this embodiment, the price defined by the airline may not be automatically compared to estimated taxes and/or costs of possible travel solutions that may be allocated for the product, so it may be up to the airline to ensure that the price defined is sufficient.

An airline may also be able to define an opaque capacity, e.g., through a business rule, as a percentage of the flight/date capacity on which opaque bookings are allowed. In the example embodiment, the opaque capacity (OC) at the flight/date level (block 284 of Fig. 5) may be determined as follows:

$$OC_{LC} = (LCC \times \% \, OBA) - SB$$

where $OC_{LC}$ is the opaque capacity at the leg/cabin level, LCC is the leg/cabin capacity, OBA is an opaque booking allowance, and SB is the number of existing non-opaque (standard) bookings. Once the opaque capacity is determined at leg/cabin level, and minimum opaque capacity at the travel solution level (block 276 of Fig. 5) may be determined as the minimum opaque capacity offered on the different legs incorporated into the travel solution. Then, to determine the opaque capacity at the O&D/date level (block 266 of Fig. 5), the maximum opaque capacity amongst the possible travel solutions may be used. In some embodiments, in the event the opaque capacity at the leg/cabin level changes for a travel solution, a notification may be sent to the O&D/date opaque inventory item associated with that leg/cabin to update as appropriate.

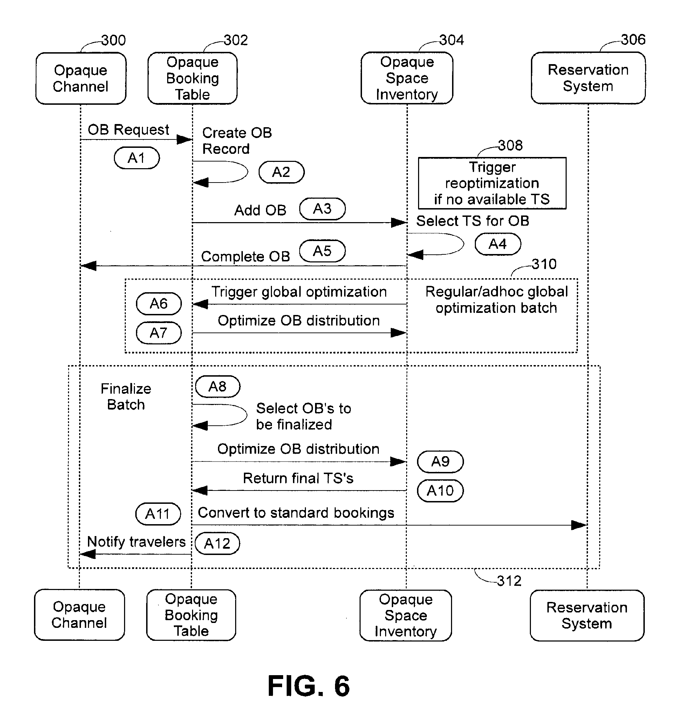

Now turning to Fig. 6, a flowchart of the operations performed over the lifetime of an opaque booking are described in greater detail, with the interaction of an opaque channel 300, opaque booking table 302, opaque space inventory 304 and reservation system 306 illustrated. Opaque channel 300 in this embodiment may be considered to be an E-Commerce or other system, or more specifically, an opaque product component thereof, through which a traveler or other user purchases or otherwise commits to an opaque product. In addition, for the purposes of simplifying the discussion, opaque booking table 302 and opaque space inventory 304 are illustrated to represent the functionality in an inventory system to manage the data stored in each of these data structures, and not the data structures themselves.

As shown in step A1, an opaque booking (OB) request may be sent from opaque channel 300 to the inventory system, resulting in the generation of an opaque booking record in opaque booking table 302 (step A2). An opaque booking is then added to the opaque space inventory 304 (step A3), at which point a current optimal travel solution (TS) is selected for the opaque booking (step A4), and the traveler is notified that the opaque booking is completed (step A5). In addition, as illustrated in block 308, if no available travel solution can be selected for the opaque booking, it may also be desirable in some embodiments to trigger a global optimization operation to reallocate all unfinalized opaque bookings. In other embodiments, such a circumstance may not occur due to up-front availability checking, whereby if no travel solution can be found for a selected opaque product, the opaque booking may not be created and the sale may be denied.

Next, as illustrated in block 310, a global optimization batch operation may be performed in steps A6 and A7. The global optimization batch may be performed periodically and/or may be performed on an adhoc basis, e.g., triggered based upon changes in circumstances such as changes in availability. In step A6, a global optimization is triggered, and in step A7, an optimized opaque bookings distribution is returned to reallocate travel solutions for all of the unfinalized opaque bookings in the opaque space inventory 304.

Next, as illustrated in block 312, a finalize batch operation may be performed in steps A8-A12. The finalize batch operation may be run periodically, e.g., daily, to finalize unfinalized opaque bookings having an information date matching the current date. In step A8, opaque bookings matching the current date are selected, and in step A9 an optimized opaque bookings distribution is forwarded to opaque space inventory 304 (e.g., based upon a similar operation performed during a global optimization). In step A10, final travel solutions for the opaque bookings to be finalized are returned, and in step A11, the opaque bookings are finalized by converting the bookings to standard bookings by notifying reservation system 306 (step A11) and notifying the travelers associated with such bookings of their respective travel solutions/itinerary details (step A12). Notification may occur, for example, using email, regular mail, text messages, or other manners that will be apparent to one of ordinary skill in the art having the benefit of the instant disclosure.

Additional example implementation details regarding the management of opaque bookings in the aforementioned example embodiment are provided below.

Flight Selection Process

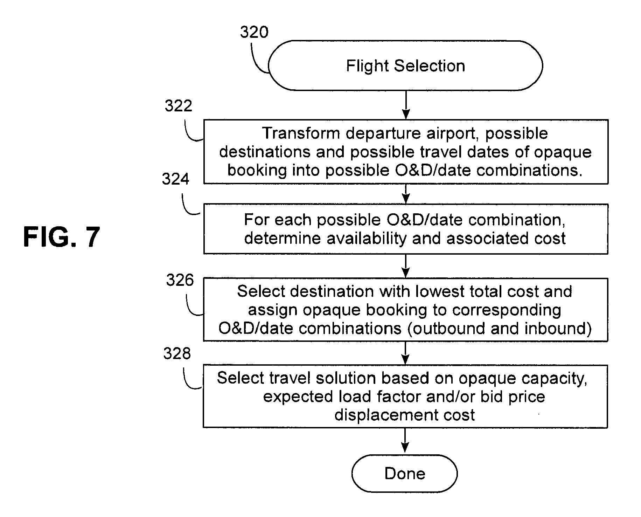

For each opaque booking, and with reference to routine 320 of Fig. 7, flight selection generally involves the selection of a destination, departure and return dates, and flight numbers corresponding to specific flights. To select the destination, the departure airport, the possible destinations and the possible travel dates of the opaque booking may be transformed into possible O&D/date combinations (block 322). Then, for each O&D/date combination, associated cost and availability may be retrieved (block 324). In some embodiments, if a particular O&D/date combination is not available, a request/trigger for global re-optimization may be generated.

Associated cost may correspond to the sum of the airport taxes of the O&D/date combination and the journey cost. In the example embodiment, the journey cost may either be a default cost, based on a generic estimated kilometrical cost and the length of the journey, or be fine-tuned based upon one or more rules, similar to the manner in which other costs, e.g., fuel surcharges, may be determined.

The availability may be retrieved based upon an opaque product inventory maintenance batch operation. In particular, and with further reference to Fig. 5, each O&D and date combination may be updated on a regular basis to ensure an optimal allocation of travel solutions to opaque bookings. The update process may be triggered based upon a regular batch (e.g., daily, every three hours, etc.), based upon opaque booking activity, and/or based upon interactive notification from the flight/date inventory. Once triggered, the details of the different flight/dates of a given O&D/date combination may be retrieved and the O&D/date may be updated accordingly, with new maximum opaque capacity (block 266), minimum expected load factor (block 268) and minimum bid price displacement cost (block 282) determined. These details may be used to determine, among others, the "most interesting" destination within an opaque product at any given time.

Returning to Fig. 7, once the associated cost and availability are determined, a destination with the lowest total cost may be selected, and the opaque booking may be assigned to the corresponding O&D/date combinations (for both outbound and inbound) (block 326). The total cost of a destination may be represented as the sum of the airport taxes, the journey cost of the outbound and inbound trips, linked by the length at destination chosen by the traveler.

To select the travel solution after an opaque booking is assigned to an O&D/date combination, opaque capacity, expected load factor and/or bid price displacement costs of the different flight/dates may be used (block 328). For example, in one embodiment, the travel solution with the highest opaque capacity may be chosen if possible. In case several travel solutions share the same highest opaque capacity, the travel solution with the lowest expected load factor may be chosen from those with the highest opaque capacity. In addition, in the event there are still several travel solutions remaining with the same highest opaque capacity and lowest expected load factor, the travel solution having the lowest bid price displacement cost may be selected.

Opaque Booking Global Optimization Process

A global optimization process may be used to optimize airline revenue based upon current circumstances. As discussed above, when an opaque booking is initially completed, a current travel solution may be selected for the opaque booking using the above flight selection process. However, due to the standard booking activity on the different flights, as well as other opaque booking activity, it is desirable to reevaluate this selection over time to ensure optimal revenue for the airline globally.

It will be appreciated that in some embodiments, a global optimization may be performed for all pending opaque bookings. In other embodiments, however, a global optimization may be limited to only a subset of the pending opaque bookings, e.g., for the opaque bookings associated with one or more specific O&D/date combinations. As such, "global" optimization within the context of the invention may refer to an optimization that assesses travel solutions for multiple opaque bookings to optimize revenue and/or availability among the multiple opaque bookings. In some embodiments, for example, an optimization process may be triggered from a given O&D/date combination, with the details of the opaque product booked by a traveler assigned on this O&D/date combination retrieved, such that the optimization process may reevaluate all the O&D/date combinations corresponding to the union of the opaque product booked by the traveler on the O&D/date combination being processed.

In the illustrated embodiment, an automatic trigger may be used to initiate the global optimization process, e.g., based upon some notification level being reached. In one instance, global optimization may be triggered during an opaque inventory maintenance batch operation. For example, if for one of the flight/date parts of an O&D/date combination, a flight/date is canceled, a flight/date expected load factor reaches a threshold and/or the flight/date opaque space capacity is less than or equal to zero, a global optimization process may be triggered to reassess pending opaque bookings. In addition, if there is no opaque capacity on the different flight/dates of a given O&D/date combination, an opaque booking optimization process may be triggered only for the given O&D/date combination(s). Furthermore, during a flight selection process performed during the maintenance batch, if the least expensive O&D/date combination(s) of a given opaque product are not available, an opaque booking optimization process may be triggered only for the given O&D/date combination(s).

In some embodiments, in the case that a flight part of a travel solution that is itself part of an O&D/date combination is not available any longer, a "local" optimization may be triggered, and the opaque bookings assigned to this travel solution may be reassigned on other flight parts of the same O&D/date combination. In addition, in some embodiments, in the case that there is no more availability on a given O&D/date combination, a "global" optimization may be processed to determine an optimal assignment of the different opaque bookings, by comparing the cost of moving at least one traveler to a more expensive O&D/date combination with the potential benefit of re-opening the given O&D/date combination within a different opaque product.

In another instance, global optimization may be triggered during an opaque booking flow. For example, if the least expensive destination for a newly made opaque booking is not available, a notification may be sent to the affected O&D/date combinations in order to verify if the opaque bookings assigned to those combinations should be reassigned.

In general, a global optimization may, for a triggered O&D/date combination, reassess the associated opaque bookings associated therewith to determine a total journey cost of the different options available for each opaque booking. The reassessment may determine the cost of moving an opaque booking to a more expensive destination, and to compare it with the benefit of reopening the O&D/date combination for another opaque product, in order to optimize revenue amongst the different opaque bookings. The global optimization may also determine if an O&D/date combination should be reopened for an opaque product, and if yes, which opaque booking should be reassigned to which destination.

As an example, consider that a trigger is received for a given O&D/date for Athens (ATH) as a destination. Consider also two opaque products (OP1 and OP2) exist, each with ATH as a possible destination, but with OP1 also having Nice (NCE) and Istanbul (IST) as other possible destinations, and OP2 having Barcelona (BCN) and Istanbul (IST) as other possible destinations (each number after an airport code refers to a cost associated with the destination):

OP1: ATH:5, NCE:10, IST:25

OP2: ATH:5, BCN:20, IST:25

Upon reassessing OP1 and OP2, and aggregating by opaque product, it may be determined, for example, that the benefit for reopening ATH for OP2 is 20-5=15, while the cost of moving OP1 from ATH to NCE = 10-5=5. Accordingly, a net benefit of 15-5=10 may be realized by moving some opaque bookings from OP1/ATH(5) to OP1/NCE(10) to free space for OP2/ATH(5) in order to reduce the cost associated with the next opaque booking on OP2.

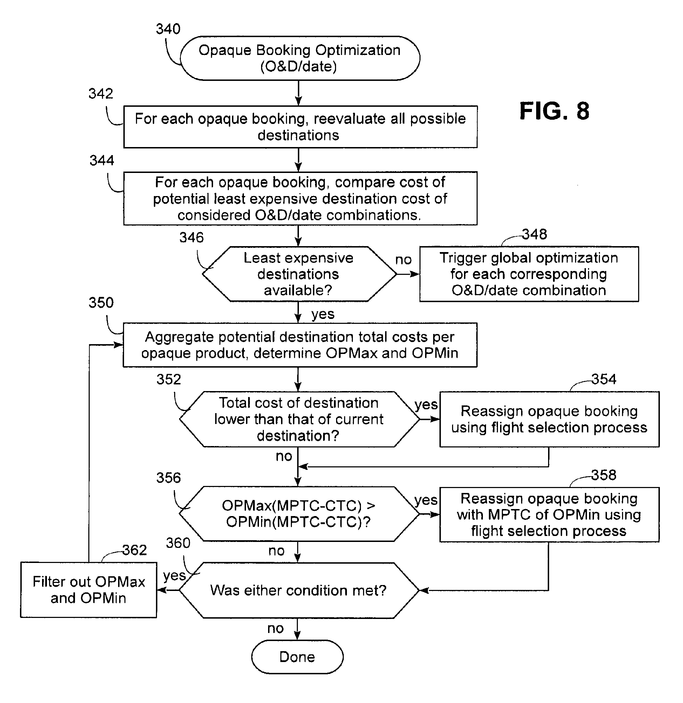

Turning now to Fig. 8, in an example embodiment, whenever an opaque booking optimization process is triggered for a given O&D/date combination, the assignment of each of the opaque bookings impacted by that combination may be reevaluated in the manner illustrated in routine 340. For each of the impacted opaque bookings, all of the possible destinations for each opaque booking may be reevaluated, and the characteristics of each of the possible O&D/date combinations may be retained for a revenue maximization process (discussed below) (block 342). Then, the cost of the potential least expensive destination of each opaque booking may be checked and compared to the cost of the considered O&D/date combinations (block 344). In case the least expensive destinations are not available ("no" path from block 346), the opaque booking optimization process may be triggered for each of the corresponding O&D/date combinations (block 348), e.g., by executing routine 340 for each such O&D/date combination. Otherwise ("yes" path from block 346), the opaque bookings may proceed directly to the revenue maximization process starting at block 350.

In particular, once the potential destination total costs have been determined for each of the opaque bookings, these potential destination total costs may be aggregated per opaque product, a maximum opaque product (OPMax) may be determined as the opaque product for which the minimum potential total cost is the highest, and a minimum opaque product (OPMin) may be determined as the opaque product for which the minimum potential total cost is the lowest (block 350).

Thereafter, two conditions may be checked to verify if the opaque bookings need to be reassigned. First, if the total cost of a destination is lower than the cost of the current destination of an opaque booking (block 352), the opaque booking may be reassigned by performing the aforementioned flight selection process for that opaque booking (block 354). Second, if OPMax(MPTC - CTC) > OPMin(MPTC - CTC), where MPTC = minimum potential total cost and CTC= current total cost (block 356), the opaque booking having the minimum potential total cost of OPMin may be reassigned by performing the aforementioned flight selection process for that opaque booking (block 358).

The aforementioned conditions may be used to determine if the airline would generate more revenue by accepting a new opaque booking on OPMax than it would lose by reassigning an opaque booking of OPMin on its potential destination.

Next, if either of the aforementioned conditions were met ("yes" path of block 360), the OPMax and OPMin opaque bookings are filtered out (block 362), and the process is restarted by returning control to block 350, until the conditions are not met ("no" path of block 360). Once the conditions are not met, the minimum cost of reassigning an opaque booking to its potential destination is higher than the benefit of reopening the given O&D/date combination to the opaque product having the highest cost. As such, the assignment of the different opaque bookings may be optimized in order to maximize the revenue generated by the airline amongst the different opaque products.

Communication of the Finalized Travel Solution to Traveler

In the example embodiment, once the information date of an opaque booking has been reached, the booking may be reevaluated to ensure it has been assigned to the most interesting destination, using the aforementioned optimization process. Next, the traveler may be informed of the details of the journey (i.e., the itinerary details). A message may be sent to a reservation system to transform the opaque booking into a standard booking, and optionally maintaining an opaque booking flag for reporting purposes. Once the standard booking is confirmed, a notification may be sent to the traveler to inform the traveler of the itinerary details. Also, in some embodiments the details of the opaque booking may also be retained in the O&D/date combination data structures for reporting purposes, as well as for opaque product availability computations, but with the opaque booking no longer eligible for reassignment.

It will be appreciated that implementation of the aforementioned opaque booking functionality within an existing travel data processing system would be within the abilities of one of ordinary skill in the art having the benefit of the instant disclosure. In one example embodiment, for example, a reservation system may be modified to support a passenger name record (PNR) format that maintains the relevant details of an opaque product or booking, e.g., list of possible destinations, possible travel dates, information date, but initially with no assigned flights. Thereafter, the inventory system may notify the reservation system to add the assigned flights.

For an E-Commerce system, direct interaction with an inventory system may be implemented to retrieve available opaque products, and a modified interaction with a pricing system may be implemented to only retrieve the part of taxes in the price that a traveler has paid (e.g., VAT, airport taxes), rather than performing the complete pricing process.

For an inventory system, in the flight/dates inventory, new information and new processes may be implemented in some embodiments. First, determination of opaque capacity may be supported, e..g, using a dedicated opaque booking counter.

Second, unfinalized opaque bookings may be configured to not decrement standard availability. Nonetheless, with opaque product availability still linked to standard booking inventory, unfinalized opaque bookings may be converted into standard bookings without overbooking the inventory.

Third, a finalized opaque booking (e.g., once converted into a standard booking) may be flagged to impact only the remaining capacity, but not the seat index. Still, by reducing the capacity, the availability is impacted but not the RMS logic enforced by the inventory system (e.g., current bid price may not be changed).

Other modifications will be apparent to one of ordinary skill in the art having the benefit of the instant disclosure.

As such, it will be appreciated that embodiments consistent with the invention may optimize revenue for a travel provider in connection with opaque bookings, e.g., based upon criteria such as amounts of taxes to favor destinations with lower taxes in order to increase margins for a travel provider and/or such as expected load factor and displacement cost in order to select an itinerary for a given destination having the lowest cost from the perspective of the travel provider. Furthermore, the optimization may be performed globally among multiple opaque bookings, rather than being limited to a single opaque booking. In addition, the selection of the itinerary may be performed at a time after completion of an opaque booking, and as such, the optimum itinerary may be determined based upon the circumstances that exist when the itinerary details are communicated to the traveler, and closer in time to when the traveler is scheduled to depart.

It will be appreciated that some of the features of the example embodiments of this invention may be used without the corresponding use of other features. In addition, various additional modifications may be made without departing from the spirit and scope of the invention. Therefore, the invention lies in the claims hereinafter appended.

**Claims**

1. A method of generating a travel itinerary for an opaque booking, the method comprising:

   in response to receiving a first opaque booking for at least one traveler, generating an initial travel itinerary for the first opaque booking, wherein the initial travel itinerary includes travel between a departure location and a destination location, and wherein at least a portion of travel itinerary details for the first opaque booking are initially withheld from the at least one traveler after the first opaque booking is completed;
   after generating the initial travel itinerary for the first opaque booking, and prior to communicating withheld travel itinerary details to the at least one traveler in advance of departure by the at least one traveler, performing a global optimization of the first opaque booking and at least a second opaque booking to optimize revenue across at least the first and second opaque bookings, wherein performing the global optimization includes modifying the initial travel itinerary for the first opaque booking to generate a modified travel itinerary that increases revenue relative to the initial travel itinerary; and
   after performing the global optimization, communicating withheld travel itinerary details associated with the modified travel itinerary to the at least one traveler prior to departure by the at least one traveler.

2. The method of claim 1, wherein modifying the travel itinerary includes modifying the destination location, changing one or more travel segments between the departure location and the destination location, changing one or more travel segments between the departure location and a modified destination location, modifying a departure date or modifying a return date.

3. The method of claim 1 or claim 2, wherein the global optimization is performed as a regular maintenance batch operation or in response to unavailability of a destination location during booking of an opaque product.

4. The method of any of claims 1 to 3, further comprising maintaining an opaque product inventory including, for each of a plurality of date, departure location and destination location combinations, a set of matching travel itineraries, an associated cost and an availability, wherein generating the initial travel itinerary includes selecting a destination location and date for the initial travel itinerary based upon the associated costs and availabilities for at least a subset of the date, departure location and destination location combinations.

5. The method of claim 4, further comprising updating the opaque product inventory in response to a new opaque booking or a regular batch operation.

6. The method of any of claims 1 to 5, further comprising performing the global optimization in response to one or more of a travel inventory item being canceled, a travel inventory item expected load factor meeting a threshold, or a travel inventory item lacking capacity for additional opaque bookings.

7. The method of any of claims 4 to 6, wherein maintaining the opaque product inventory further includes, for each of the plurality of date, departure location and destination location combinations, maintaining for each of a plurality of travel inventory items included in the set of matching travel itineraries one or more of an expected load factor, an opaque capacity or a bid price displacement cost, and wherein generating the initial travel itinerary further includes selecting a matching travel itinerary from among the set of matching travel itineraries for a date, departure location and destination combination matching the selected destination location and date for the initial travel itinerary based upon the one or more of the opaque capacity, expected load factor, or bid price displacement cost for one or more travel inventory items included in the set of matching travel itineraries for the date, departure location and destination combination matching the selected destination location and date for the initial travel itinerary.

8. The method of any of claims 4 to 7, wherein performing the global optimization includes reselecting a destination location and date or reselecting a matching travel itinerary from among the set of matching travel itineraries for the date, departure location and destination combination matching the selected destination location and date for the initial travel itinerary.

9. The method of any of claims 1 to 8, wherein the first and second opaque bookings are among a plurality of opaque bookings, and wherein performing the global optimization includes comparing a cost of changing the first opaque booking from a first, less expensive date, departure location and destination location combination to a second, more expensive date, departure location and destination location combination with a benefit of reopening the first, less expensive date, departure location and destination location combination for another opaque booking among the plurality of opaque bookings.

10. The method of any of claims 4 to 9, wherein the associated cost for a travel itinerary is based at least in part on a tax associated with one or more locations associated with the travel itinerary and an expected load factor and displacement cost associated with one or more travel inventory items associated with the travel itinerary.

11. The method of any of claims 1 to 10, wherein communicating withheld travel itinerary details associated with the modified travel itinerary to the at least one traveler is performed at a time relative to departure by the at least one traveler.

12. The method of any of claims 1 to 11, further comprising performing a plurality of global optimizations between a time of completing the first opaque booking and the time relative to departure by the at least one traveler to refine the initial travel itinerary based on changes in availability and/or revenue data from the time of the first opaque booking.

13. An apparatus, comprising:

at least one processing unit; and
program code configured upon execution by the at least one processing unit to:

in response to receiving a first opaque booking for at least one traveler, generate an initial travel itinerary for the first opaque booking, wherein the initial travel itinerary includes travel between a departure location and a destination location, and wherein at least a portion of travel itinerary details for the first opaque booking are initially withheld from the at least one traveler after the first opaque booking is completed;
after generating the initial travel itinerary for the first opaque booking, and prior to communicating withheld travel itinerary details to the at least one traveler in advance of departure by the at least one traveler, perform a global optimization of the first opaque booking and at least a second opaque booking to optimize revenue across at least the first and second opaque bookings, wherein performing the global optimization includes modifying the initial travel itinerary for the first opaque booking to generate a modified travel itinerary that increases revenue relative to the initial travel itinerary; and
after performing the global optimization, communicate withheld travel itinerary details associated with the modified travel itinerary to the at least one traveler prior to departure by the at least one traveler.

14. The apparatus of claim 13, wherein the program code is configured to perform the method of any of claims 2 to 12.

15. A computer program configured upon execution by at least one processing unit to:

in response to receiving a first opaque booking for at least one traveler, generate an initial travel itinerary for the first opaque booking, wherein the initial travel itinerary includes travel between a departure location and a destination location, and wherein at least a portion of travel itinerary details for the first opaque booking are initially withheld from the at least one traveler after the first opaque booking is completed;
after generating the initial travel itinerary for the first opaque booking, and prior to communicating withheld travel itinerary details to the at least one traveler in advance of departure by the at least one traveler, perform a global optimization of the first opaque booking and at least a second opaque booking to optimize revenue across at least the first and second opaque bookings, wherein performing the global optimization includes modifying the initial travel itinerary for the first opaque booking to generate a modified travel itinerary that increases revenue relative to the initial travel itinerary; and
after performing the global optimization, communicate withheld travel itinerary details associated with the modified travel itinerary to the at least one traveler prior to departure by the at least one traveler.

**FIG. 1**

TRAVEL
RESERVATION
DEVICE <u>104</u>

100

<u>103</u>
NETWORK

RESERVATION
SYSTEM <u>102</u>

INVENTORY
SYSTEM(S) <u>106</u>

TRAVEL PROVIDER
SYSTEM(S) <u>108</u>

INVENTORY SYSTEM     <u>106</u>

<u>162</u>     MEMORY

OPAQUE PRODUCT MODULE — 172

OPAQUE SPACE INVENTORY — 174

OPAQUE BOOKINGS TABLE — 176

OS     <u>170</u>

**FIG. 2**

PROCESSOR     <u>160</u>

USER I/F     <u>164</u>     NETWORK I/F     <u>168</u>

## FIG. 3

```
                204
          ┌──────────┐
          │    E-    │
          │ Commerce │
          └──────────┘
                │            206
          ┌──────────────┐
          │ Reservation  │
          │     and      │
          │  Ticketing   │
          │              │
  210 ─┐  │  ┌────────┐  │
          │  │  PNR   │  │
  212 ─┐  │  └────────┘  │
          │  ┌────────┐  │
          │  │  EMD   │  │
  214 ─┐  │  └────────┘  │
          │  ┌────────┐  │
          │  │ Ticket │  │
  216 ─┐  │  └────────┘  │
          │  ┌────────┐  │
          │  │Pricing │  │
          │  └────────┘  │
          └──────────────┘
                │            208
          ┌──────────┐
          │   Fare   │
          │  Quote   │
          └──────────┘
```

- RMS — 234
- BZR — 232
- 200
- 202 Inventory
- Opaque Products — 220
- Opaque Booking Records — 218
- Opaque Space Inventory — 222
- Journey Server
- 228
- Global Optimizer — 230
- Opaque Product Prices — 226
- Flight Dates Inventory — 224

## FIG. 4

Opaque Booking (1,n) — 232

Opaque Product (1) — 234

| Opaque Booking (1,n) | Opaque Product (1) |
|---|---|
| Number in Party — 236 | Opaque Product Name — 246 |
| Traveler Name — 238 | Price Paid — 248 |
| Traveler Contact — 240 | List of Kept Destinations — 250 |
| Point of Sale — 242 | List of Possible Travel Dates — 252 |
| Date of Booking — 244 | Communication Date — 254 |

```
┌──────────────────────┐ ┐260
│   O&D/Date (1,n)      │ ┘
└───┬──────────────────┘
    │   ┌──────────────────────────────────────┐
    │   │   ┌─────────────────────────┐ ┐264
    ├───┤   │   Minimum Total Tax     │ ┘
    │   │   └─────────────────────────┘
    │   │   ┌─────────────────────────┐ ┐266
    ├───┤   │   Max. Opaque Capacity  │ ┘
    │   │   └─────────────────────────┘
    │   │   ┌─────────────────────────┐ ┐268
    ├───┤   │   Min. Exp. Load Factor │ ┘
    │   │   └─────────────────────────┘
    │   │   ┌─────────────────────────┐ ┐270
    └───┤   │   Total Bookings        │ ┘
        │   └─────────────────────────┘
```

# FIG. 5

```
┌──────────────────────┐ ┐262
│  Travel Solution (1,n)│ ┘
└───┬──────────────────┘
    │                              ┌──────────────────────────┐ ┐272
    ├──────────────────────────────│       Flight (1, n)      │ ┘
    │                              └───┬──────────────────────┘
    │   ┌─────────────────────────┐ ┐274    │   ┌──────────────────────────┐ ┐284
    ├───┤   Est. Total Tax        │ ┘       ├───┤   Opaque Capacity        │ ┘
    │   └─────────────────────────┘         │   └──────────────────────────┘
    │   ┌─────────────────────────┐ ┐276    │   ┌──────────────────────────┐ ┐286
    ├───┤   Min. Opaque Capacity  │ ┘       ├───┤   Exp. Load Factor       │ ┘
    │   └─────────────────────────┘         │   └──────────────────────────┘
    │   ┌─────────────────────────┐ ┐278    │   ┌──────────────────────────┐ ┐288
    ├───┤   Min. Exp. Load Factor │ ┘       ├───┤   BP Displacement Cost   │ ┘
    │   └─────────────────────────┘         │   └──────────────────────────┘
    │   ┌─────────────────────────┐ ┐280    │   ┌──────────────────────────┐ ┐290
    ├───┤   Total Bookings        │ ┘       └───┤   Opaque Bookings        │ ┘
    │   └─────────────────────────┘             └──────────────────────────┘
    │   ┌─────────────────────────┐ ┐282
    └───┤   BP Displacement Cost  │ ┘
        └─────────────────────────┘
```

17

FIG. 6

**FIG. 7**

320
Flight Selection

322
Transform departure airport, possible destinations and possible travel dates of opaque booking into possible O&D/date combinations.

324
For each possible O&D/date combination, determine availability and associated cost

326
Select destination with lowest total cost and assign opaque booking to corresponding O&D/date combinations (outbound and inbound)

328
Select travel solution based on opaque capacity, expected load factor and/or bid price displacement cost

Done

**FIG. 8**

340 — Opaque Booking Optimization (O&D/date)

342 — For each opaque booking, reevaluate all possible destinations

344 — For each opaque booking, compare cost of potential least expensive destination cost of considered O&D/date combinations.

346 — Least expensive destinations available?

— no → 348 — Trigger global optimization for each corresponding O&D/date combination

— yes

350 — Aggregate potential destination total costs per opaque product, determine OPMax and OPMin

352 — Total cost of destination lower than that of current destination?

— yes → 354 — Reassign opaque booking using flight selection process

— no

356 — OPMax(MPTC-CTC) > OPMin(MPTC-CTC)?

— yes → 358 — Reassign opaque booking with MPTC of OPMin using flight selection process

— no

360 — Was either condition met?

— yes → 362 — Filter out OPMax and OPMin

— no

Done

Europäisches
Patentamt

European
Patent Office

Office européen
des brevets

# EUROPEAN SEARCH REPORT

**Application Number**

EP 15 00 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/091481 A1 (MESSA SUZETTE [US] ET AL) 17 April 2008 (2008-04-17)<br>* abstract *<br>* paragraph [0004] *<br>* paragraph [0009] *<br>* paragraph [0013] *<br>----- | 1-15 | INV.<br>G06Q10/00<br>G06Q50/14 |
| X | US 2005/086087 A1 (RAZZA ANNE M [US] ET AL) 21 April 2005 (2005-04-21)<br>* abstract *<br>* figure 3 *<br>* paragraph [0008] *<br>* paragraph [0028] - paragraph [0032] *<br>----- | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 30 April 2015 | Gardiner, Alexander |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...........................................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 15 00 0146

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2015

| Patent document cited in search report | Publication date | Patent family member(s) | Publication date |
|---|---|---|---|
| US 2008091481 A1 | 17-04-2008 | NONE | |
| US 2005086087 A1 | 21-04-2005 | US 2005086087 A1<br>US 2008021745 A1 | 21-04-2005<br>24-01-2008 |

EPO FORM P0459

For more details about this annex : see Official Journal of the European Patent Office, No. 12/82